# EUROPÄISCHE PATENTSCHRIFT

(11) **EP 2 468 486 B1**
(45) Veröffentlichungstag und Bekanntmachung des Hinweises auf die Patenterteilung: **18.03.2020**
(21) Anmeldenummer: 10016007.6
(22) Anmeldetag: 23.12.2010
(51) Int. Cl.: B29C 70/86, B29C 70/88, F28F 21/00, B29L 31/18, F28F 7/02, F28F 21/02, F28F 21/06, F28F 21/08, F28D 1/047

(54) **Verfahren zur Herstellung eines Wärmetauschers**
Method for the production of a heat exchanger
Procédé de fabrication d'un échangeur thermique

(43) Veröffentlichungstag der Anmeldung: 27.06.2012
(60) Teilanmeldung: 19155594.5
(73) Patentinhaber: Zehnder Group International AG, 5722 Gränichen (CH)
(72) Erfinder: Kriesi, Ruedi, 8820 Wädenswil (CH); Hotz, René, 4600 Olten (CH)
(74) Vertreter: Rausch Wanischeck-Bergmann Brinkmann

(56) Entgegenhaltungen:
- DE-A9-102007 001 029
- FR-A1- 2 267 868
- FR-A1- 2 356 494
- JP-A- S6 398 965
- US-A1- 2004 261 266
- US-A1- 2006 075 761

## Beschreibung

Die vorliegende Erfindung betrifft ein Verfahren zur Herstellung eines Wärmetauschers aus einem Leitungssystem und einem Körperelement aus thermisch leitfähigem Material.

Wärmetauscher sind umfangreich bekannt. Im Sinne der vorliegenden Erfindung sind Wärmetauscher auch Heizkörper und Systeme, die sowohl bei gleichartigen als auch bei ungleichartigen Aggregatzuständen der Medien einzusetzen sind, also flüssig-flüssig, gasförmig-gasförmig, gasförmig-flüssig usw.

Bei bekannten Verfahren werden Rohrregister in Platten aus thermisch leitfähigem Material eingepresst oder zwischen mehreren derartigen Platten verpresst. Derartige thermisch leitfähige Materialien sind beispielsweise Platten aus Grafitschaum. Diese sind pressbar und haben eine sehr geringe mechanische Beständigkeit. Insbesondere ist es völlig ausgeschlossen, Zusatzelemente an den Platten anzuordnen oder irgendwie zu befestigen. Die Leitfähigkeit der Platten wird durch die Komprimierung beim Verpressen beeinflusst.

Darüber hinaus hat sich gezeigt, dass der Wärmeübergang vom Rohrregister auf die Platte sehr schlecht ist. Wenn derartige Wärmetauscherelemente für Heiz- und/oder Kühlkörper eingesetzt werden, geht vergleichsweise viel Energie im Übergang von Rohr auf Platte verloren. Die Platte verteilt die Wärme gut.

Aus der J63 98965A ist ein Wärmetauscher bekannt, der über Leitungen verfügt, die mittels Verpressen in Blähgraphit eingebettet sind. Dabei wird der Blähgraphit in an sich bekannter Weise dadurch hergestellt, dass Graphitflocken mittels einer Säure behandelt werden. Nach einem Verpressen der Leitungen erfolgt eine Temperaturbehandlung, infolge dessen es zur Sandwichausbildung kommt, so dass der mit den verpressten Leitungen versehene Blähgraphit zwischen zwei Platten angeordnet wird.

Aus der US 2006/0075761 A1 ist ein Verfahren zur Herstellung eines Wärmespeichers bekannt, welcher Wärmespeicher ein thermisch leitfähiges metallisches Medium einerseits und ein darin eingebettetes Rohrregister andererseits aufweist. Das Rohrregister ist innerhalb des metallischen Mediums angeordnet und von diesem im Wesentlichen vollständig umgeben.

Aus der FR2356494 ist ein Verfahren zur Herstellung einer Anordnung von Wärmetauscherrohren bekannt, umfassend das Anordnen einer vertikalen Anordnung von Rohren, die von einem temporären Abstandshalter gehalten werden, auf dem Boden einer Form, in die ein Gießharz gegossen werden kann, um eine Platte zu bilden, die die Enden der Rohre fixiert.

Das leitfähige metallische Medium wird aus einem vorgefertigten einstückig ausgebildeten metallischen Material im Druckgussverfahren gewonnen. Nach einer Herstellung des metallischen Mediums wird das Rohrregister nachträglich in dem Medium angeordnet.

Ausgehend vom vorbeschriebenen Stand der Technik liegt der vorliegenden Erfindung die **Aufgabe** zugrunde, ein Verfahren zur Herstellung eines Wärmetauschers bereitzustellen, welcher mechanisch stabil ist, verbesserte thermische Leiteigenschaften hat und die Möglichkeit der Herstellung eines Zwischenprodukts eröffnet. Darüber hinaus sollen Wärmetauscher mit unterschiedlichen Raumformen herstellbar sein.

Zur technischen **Lösung** wird ein Verfahren zur Herstellung eines Wärmetauschers mit dem Merkmal des Anspruches 1 vorgeschlagen.

Durch die erfindungsgemäße Ausgestaltung ist es nunmehr möglich, Wärmetauscher mit unterschiedlichster Raumform herzustellen. Darüber hinaus kann die Masse hinsichtlich ihrer Eigenschaften modifiziert und an den jeweiligen Anwendungsfall angepasst werden. Schlussendlich können auch die Rohrregister der Raumform optimal angepasst werden und durch die Vorbehandlung beim Eingießen in einen guten thermisch leitfähigen Verbund mit der Masse gebracht werden.

Bei dem erfindungsgemäßen Verfahren wird zunächst ein vorgefertigtes Rohrregister in eine Form gelegt und diese mit einer fließfähigen Masse ausgefüllt. Bei der fließfähigen Masse handelt es sich um eine Masse aus einem thermisch gut leitfähigen Material.

Dieses enthält Grafit und/oder Schaumgrafit. Das thermisch leitfähige Material kann entweder in einem gießfähigen Zustand vorliegen und in die Form gegossen werden, oder als loses Material in die Form geschüttet und verdichtet bzw. eingestampft werden. Auch im Falle des Einbringens des losen Materials wird von Material in fließfähigem Zustand gesprochen.

Das Rohrregister bildet ein Leitungssystem mit einem Einlass und einem Auslass und kann von einem Medium durchströmt werden. Es kann ganz oder teilweise aus Kunststoff und/oder ganz oder teilweise aus Metall gebildet sein. Die einzelnen Leitungsteile können miteinander verklebt, verschweißt oder sonst wie verbunden sein.

Zum Einlegen des Rohrregisters in die Form können Abstandhalter verwendet werden, die später in der Masse eingefüllt sind. Erfindungsgemäß werden auch Zusatzbauteile, wie mechanische Anschlussstellen, Fluidanschlüsse und dergleichen mit eingesetzt und vergossen.

Die thermisch leitfähige Masse wird gießfähig in die Form eingebracht oder als loses Material eingefüllt und härtet nach thermischen und/oder chemischen Reaktionsverfahren aus.

Die Form kann zum Teil mit am Wärmetauscher verbleibenden Elementen versehen werden. So kann beispielsweise eine Schicht auch Kunststoff oder Metall eingelegt werden, die nach der Entformung des Wärmetauschers eine einseitige Beschichtung darstellt.

Die Erfindung ermöglicht auch die Ausbildung von mehrschichtigen Wärmetauscherelementen, so dass auch Fluid-Fluidwärmetauscher gebildet werden können oder Fluid-Gaswärmetauscher mit entsprechender Kapazität.

Der Gestaltungsvielfalt sind durch die Erfindung keine Grenze gesetzt. Darüber hinaus können die Wärmetauscher modular vorgefertigt und in großen Stückzahlen auf einfache Weise erstellt werden.

Weitere Vorteile und Merkmale der Erfindung ergeben sich aus der folgenden Beschreibung anhand der Figuren.

Dabei zeigen:
- Figur 1: eine Draufsicht auf ein Ausführungsbeispiel der Erfindung;
- Figur 2: eine Seitenansicht gemäß Figur 1;
- Figur 3: eine Seitenansicht eines entformten Wärmetauschers und
- Figur 4: eine Seitenansicht einer alternativen Ausführungsform eines Wärmetauschers.

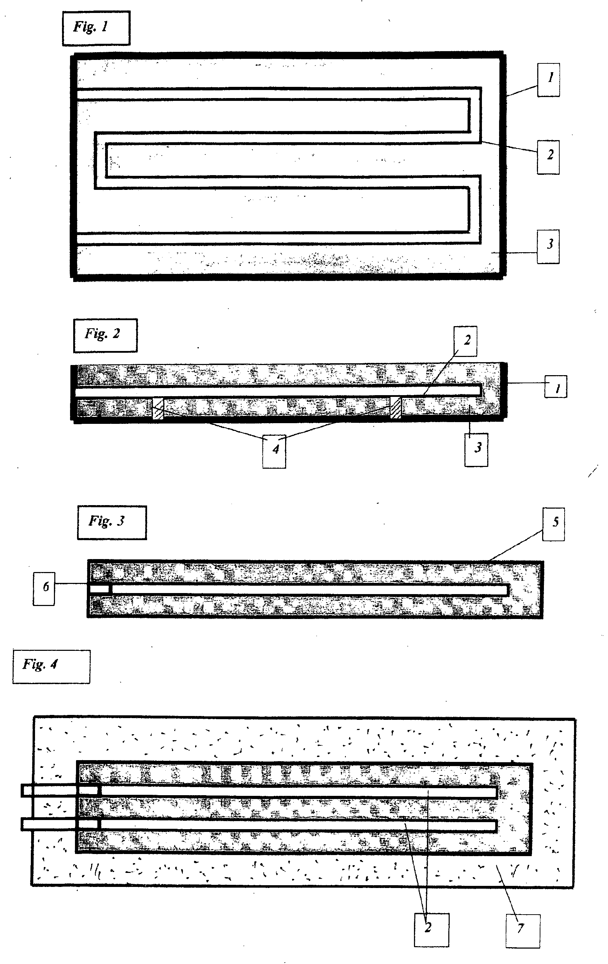

Gemäß Figuren 1 und 2 ist eine im Wesentlichen rechteckig/kastenförmige Form 1 mit Abstandhaltern 4 versehen, auf welche ein Rohrregister 2 aufgesetzt ist. Der verbleibende Raum wird dann mit der Masse aus thermisch leitfähigem Material ausgefüllt. Dabei können selbstverständlich die Öffnungen des Rohrregisters 1 verschlossen werden. Ein Öffnen ergibt sich nach dem Entformen.

Gemäß Figur 3 kann ein derartiger Wärmetauscher nach dem Entformen dann in einer Seitenansicht wie dargestellt gebildet sein. Er hat den Anschluss 6 für ein Fluidsystem und das Rohrregister ist mit dem Material aus thermisch leitfähiger Masse umgeben und geschützt. Der so gebildete Wärmetauscher 5 ist einsatzbereit.

Ein alternatives System ist in Figur 4 gezeigt, wobei der Wärmetauscher zwei übereinander liegende Rohrsysteme 2 aufweist, und darüber hinaus noch mit einer Schicht aus Isoliermaterial 7 umgeben ist. Auf diese Weise ist ein optimaler Fluid-Fluidwärmetauscher oder auch Gas- Fluidwärmetauscher gebildet. Die Isolierschicht 7 kann beim Gießen oder nachträglich aufgebracht werden.

Mit der Erfindung wird ein neuartiger Wärmetauscher und ein Verfahren zu dessen Herstellung bereitgestellt, der sich beispielsweise für den Einsatz in Heizungs- und Kühlsystemen oder dergleichen, Heizungssystemen und dergleichen besonders eignet. Das Verfahren ist einfach durchführbar und hinsichtlich Gestaltung und Variation der technischen Parameter optimiert.

Die beschriebenen Ausführungsbeispiele dienen der Erläuterung und sind nicht beschränkend.

### Bezugszeichen:

- 1: Form
- 2: Rohrregister
- 3: Masse
- 4: Abstandshalter
- 5: Wärmetauscher
- 6: Anschluss
- 7: Isoliermaterial

## Patentansprüche

1. Verfahren zur Herstellung eines Wärmetauschers (5) aus einem Leitungssystem und einem Körperelement aus thermisch leitfähigem Material (3) aufweisend Grafit und/oder Schaumgrafit, wobei das Leitungssystem in einer Form (1) angeordnet und fixiert wird, wobei das thermisch leitfähige Material (3) in fließfähigem Zustand in die Form (1) gefüllt wird, wobei eine Aushärtung des Materials (3) in einem thermischen und/oder chemischen Reaktionsverfahren durchgeführt wird, wobei nach dem Aushärten des Materials (3) der Wärmetauscher (5) der Form (1) entnommen wird, wobei das Leitungssystem mit dem thermisch leitfähigen Material (3) umgeben und geschützt ist, wobei das Leitungssystem durch ein Rohrregister gebildet wird, wobei an dem Rohrregister (2) Zusatzelemente (6) vor dem Einbringen des thermisch leitfähigen Materials (3) angeordnet werden.

2. Verfahren nach Anspruch 1, **dadurch gekennzeichnet, dass** das thermisch leitfähige Material (3) in gießfähigem Zustand in die Form (1) gegossen wird oder als loses Material (3) in die Form (1) geschüttet und verdichtet wird.

3. Verfahren nach Anspruch 1, **dadurch gekennzeichnet, dass** das Rohrregister (2) wenigstens teilweise aus Kunststoff gebildet ist.

4. Verfahren nach Anspruch 1, **dadurch gekennzeichnet, dass** das Rohrregister (2) wenigstens teilweise aus Metall gebildet ist.

5. Verfahren nach einem der Ansprüche 1 bis 4, **dadurch gekennzeichnet, dass** das Rohrregister (2) durch Verkleben gebildet wird.

6. Verfahren nach einem der Ansprüche 1 bis 4, **dadurch gekennzeichnet, dass** das Rohrregister (2) durch Verschweißen gebildet wird.

7. Verfahren nach einem der vorhergehenden Ansprüche, **dadurch gekennzeichnet, dass** Rohröffnungen vor dem Einbringen des thermisch leitfähigen Materials (3) verschlossen werden.

## Claims

1. Method for the production of a heat exchanger (5) from a tube system and a body element of thermally conductive material (3) comprising graphite and/or foamed graphite, wherein the tube system is arranged and fixed in a mold (1), wherein the thermally conductive material (3) is filled into the mold (1) in a flowable state, wherein curing of the material (3) is carried out in a thermal and/or chemical reaction process, wherein, after curing of the material (3), the heat exchanger (5) is removed from the mold (1), wherein the tube system is surrounded and protected by the thermally conductive material (3), wherein the tube system is formed by a tube register, wherein additional elements (6) are arranged on the tube register (2) before the thermally conductive material (3) is introduced.

2. Method according to claim 1, **characterized in that** the thermally conductive material (3) is poured into the mold (1) in a castable state or is poured into the mold (1) as loose material (3) and compacted.

3. Method according to claim 1, **characterized in that** the tube register (2) is at least partially formed of plastic.

4. Method according to claim 1, **characterized in that** the tube register (2) is at least partially formed of metal.

5. Method according to any one of claims 1 to 4, **characterized in that** the tube register (2) is formed by gluing.

6. Method according to any one of claims 1 to 4, **characterized in that** the tube register (2) is formed by welding.

7. Method according to any one of the preceding claims, **characterized in that** tube openings are closed before the thermally conductive material (3) is introduced.

## Revendications

1. Procédé de fabrication d'un échangeur thermique (5) à partir d'un système de tubes et d'un élément de corps en matériau thermoconducteur (3) en graphite et/ou en graphite moussé, dans lequel le système de tubes est disposé et fixé dans un moule (1), dans lequel le matériau thermoconducteur (3) est rempli dans le moule (1) à l'état coulante, dans lequel le durcissement du matériau (3) est effectué dans un processus de réaction thermique et/ou chimique, dans lequel, après le durcissement du matériau (3), l'échangeur de chaleur (5) est retiré du moule (1), dans lequel le système de tubes est entouré et protégé par le matériau thermoconducteur (3), dans lequel le système de tubes est formé par un registre de tubes, dans lequel des éléments supplémentaires (6) sont disposés sur le registre de tubes (2) avant l'introduction du matériau thermoconducteur (3).

2. Procédé selon la revendication 1, **caractérisé en ce que** le matériau thermoconducteur (3) est versé dans le moule (1) à l'état coulable ou est versé dans le moule (1) sous forme de matériau en vrac (3) et compacté.

3. Procédé selon la revendication 1, **caractérisé en ce que** le registre de tubes (2) est au moins partiellement formé de plastique.

4. Procédé selon la revendication 1, **caractérisé en ce que** le registre de tubes (2) est au moins partiellement formé de métal.

5. Procédé selon l'une quelconque des revendications 1 à 4, **caractérisé en ce que** le registre de tubes (2) est formé par collage.

6. Procédé selon l'une quelconque des revendications 1 à 4, **caractérisé en ce que** le registre de tubes (2) est formé par soudage.

7. Procédé selon l'une des revendications précédentes, **caractérisé en ce que** les ouvertures de tube sont fermées avant l'introduction du matériau thermoconducteur (3).
